# EUROPEAN PATENT SPECIFICATION

(11) **EP 0 718 222 B1**
(45) Date of publication and mention of the grant of the patent: **27.03.2002**
(21) Application number: 95120027.8
(22) Date of filing: 19.12.1995
(51) Int. Cl.: B65G 47/84, B65G 47/29

(54) **An apparatus to supply separated articles**
Vorrichtung zum Zuführen von getrennten Gegenständen
Appareil pour l'alimentation des articles séparés

(30) Priority: 19.12.1994 JP 31450694
(43) Date of publication of application: 26.06.1996
(73) Proprietor: MATSUSHITA ELECTRIC INDUSTRIAL CO., LTD., Kadoma-shi, Osaka 571-0050 (JP)
(72) Inventor: Kouda, Minoru, Hirakata-shi, Osaka 573 (JP); Itou, Hideki, Machida-shi, Tokyo 194 (JP)
(74) Representative: Grünecker, Kinkeldey, Stockmair & Schwanhäusser Anwaltssozietät

(56) References cited:
- US-A- 3 286 814
- US-A- 5 082 104
- US-A- 5 123 518

## Description

The present invention relates an apparatus according to the preamble at claim 1. Such an apparatus is designed to continuously supply separated round articles to an index wheel of automatic machine by which said round articles are continuously fed into semi-circular indentations disposed at an equal distance which is larger than the diameter of said articles on the outer peripheral of continuously or intermittently rotated index wheel.

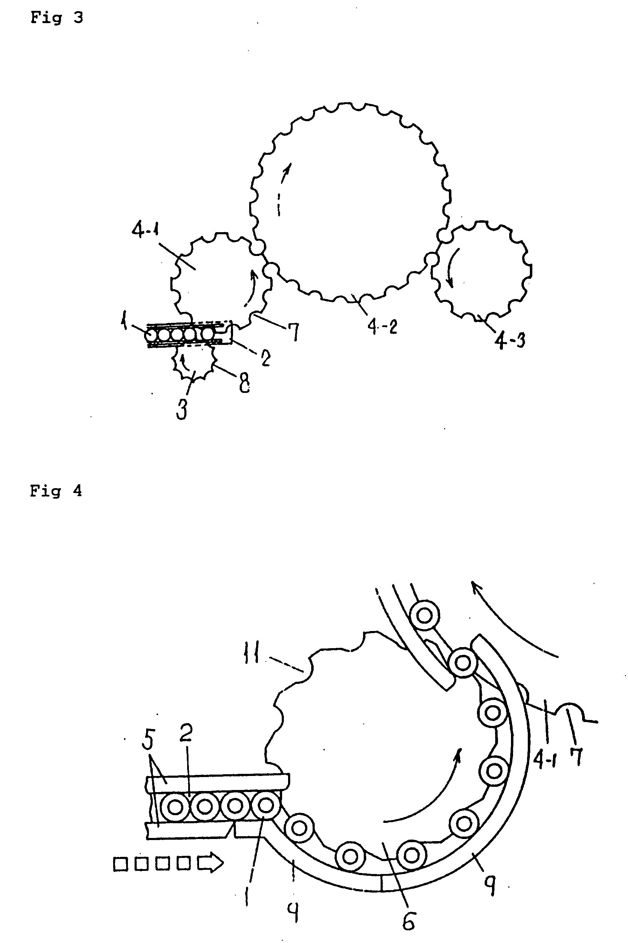

A conventional method supplying continuously articles 1 having round or cylindrical cross-sections into semi-circular indentations 7 disposed at an equal distance slightly larger than the diameter of articles provided at an peripheral of continuously or intermittently rotated index wheel 4-1 of automatic machine had been primarily employed by an automatic supply and indexing machine such as the one shown in Fig. 4.

That is, a method by which articles 1 are forcibly inserted into entry index wheel 6 on which notches 11 for taking up said articles at a predetermined interval by utilizing the propelling power or weight itself of article are provided, and the gap between said articles taken up by said notches is increased to a predetermined size before these articles are supplied into indentations 7 of automatic machine, had been employed.

However, when the above-shown method is employed, the velocity of article 1 comes intermittently down to zero or instantaneously slowed down during the period starting from the introduction into guide 5, continuous disposition on conveyer 2, and ended with forcible entry into notch 11 of entry index wheel 6, while the velocity of article is increased very rapidly up to the rim speed of entry index wheel 6 when it is taken up by notch 11 as shown in Fig. 4.

Therefore, article 1 is inevitably subjected to a very large velocity change causing a possible destruction or damage of article itself or drop-off of the constituting component due to the pulsating movement and the shock inflicted on the article.

Moreover, the article may have a chance of bouncing back onto the insertion pass due to the repulsive force acted thereon when it is pressed on entry index wheel 6, causing problems such as a hooking on the edge of straight guide 5, binding on the notch 11 of entry index wheel 6, or a binding at the entrance of straight or circular guide.

Furthermore, in order to solve these problems, a means providing an unevenly pitched lead-screw 10 synchronized with the rotation of supply index wheel 4-4 which is synchronized further with the rotation of index wheel 4-1 of automatic machine at the ending of carrying conveyer 2 had been employed.

By using grooves 10-1 machined on the outer surface of unevenly pitched lead screw 10, the gap distance between the articles 1 is increased to a distance matched with the interval of indentations 7 provided on the peripheral index wheel 4-1, and both the timing of supply and the transporting velocity are synchronized with the rotations of index wheel 4-1 and supply index wheel 4-4 respectively.

Therefore, articles 1 can be proceeded forward by the rotational movement of groove 10-1 and fed forward smoothly into index wheel 4-1 of automatic machine providing a wider gap distance between article 2. However, this method is disadvantageous because the machining of unevenly grooved screw is costly, the shape of article to be transported is somehow restricted, and a fairly large space have to be provided for the installation of the machine.

US 5,082,104 describes an apparatus for transporting and separating objects transported on a conveyor belt. In order to provide an exact separation of a predetermined number of articles the described apparatus uses two star wheels. These star wheels are located behind each other in transport direction and engage the articles. The first star wheel is driven with a slower speed than the conveyor belt in order to hold articles back. The second star wheel is provided with recesses and a projecting section. The number of recesses corresponds to articles to be transported behind each other in a unit. The projecting section creates a predetermined gap between the individually transported units comprising a number of articles.

Another apparatus for grouping articles of substantially uniform size is described in US 3,286,814. The described apparatus uses a convenyor for carrying the articles, in particular bottles, and a star wheel which operates in the pass of the articles. The articles are advanced by the conveyor between side guides. The star wheel permits a predetermined number of articles to pass as a group.

It is the object of the present invention to provide an apparatus for a smooth and easy supply of articles to an automatic machine.

This is achieved by the features of claim 1.

The present invention employs the features of a method by which a star index wheel on which plural circular indentations housing plural round articles having radii nearly same as those of said indentations are disposed on the outer rim of said star index wheel is disposed on the side of carrying conveyer by which said round or cylindrical articles are transported without gap distance between said articles, and said star index wheel is rotated at a rotating speed realizing a center speed of said circular indentation slightly less than the linear speed of said carrying conveyer so that the movement of said articles on said conveyer is constrained by the protrusions provided between said indentations on said index wheel, and the articles are separated to arbitrarily equal distances on said conveyer when those are released from the constrain of the protrusions. An apparatus of the present invention supplys said articles separated by said method by which the gap distance between said articles is increased at an arbitrary equal distance larger than the radius of said article without causing abrupt speed changes or severe mechanical shocks afflicted on said articles realizing a smooth supply of said articles.

Fig. 1 is a planar drawing of this invntion showing a condition where the continuously disposed articles on the carrying conveyer are separated by a star index wheel.

Fig. 2 shows a planar view of this invention showing a condition where the continuously disposed articles disposed without gaps are sepa-rated by a star index wheel, and are supplied to an index wheel of automatic machine, showing that the separations are concluded.

Fig. 3 shows a planar layout of an automatic machine with a separation and supply apparatus which is an embodiment of the invention.

Fig. 4 shows a condition at which the articles disposed without gaps are separated and supplied to the index wheel of automatic machine in a conventional separation and supplying apparatus.

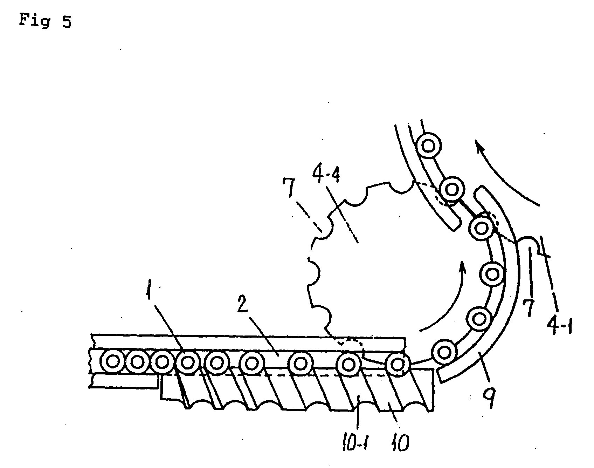

Fig. 5 shows a case where an unevenly grooved lead screw adapted in a conventional separation and supplying apparatus.

Embodiments of this invention are now explained below by referring the attached drawings.

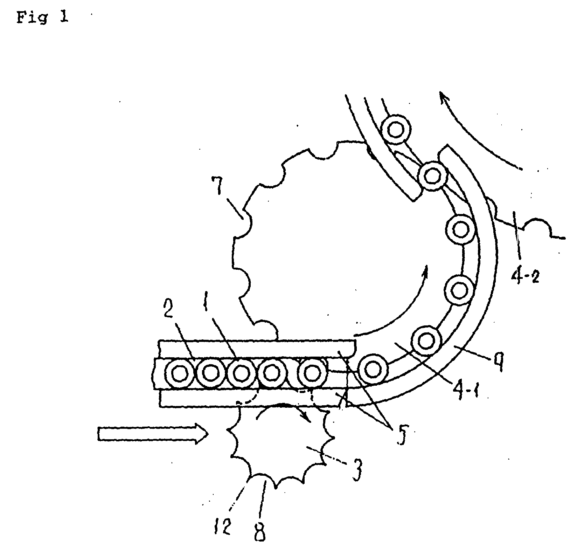

In Fig. 1, 1 is an article such as cell being transported, 2 is a carrying conveyer, 3 is a star index wheel, 4-1 is an index table of rotary automatic machine, and 5 is a straight guide of carrying conveyer 2. On the rims of star index wheel 3 and index wheel 4-1 (a supply index wheel) of automatic machine, provided are twelve circular indentations (semi-circular notches) 7 and 8. Although the diameters of these indentations are different each other, both of these are disposed at a separation angle of thirty degrees in order to house cell 1 therein.

The radii of circular indentations 7 and 8 are nearly same with the radius of cell 1, and the diameter of star index wheel 3 is about 100 mm in this embodiment of the invention while the diameter of index wheel 4-1 of automatic machine is about twice of that in this embodiment so that the each of the peripheral distances between indentations 8 and 7 of each index wheel is about twice of cell 1 in a case of star index wheel 3 while it is about twice of that in a case of index wheel 4-1 of automatic machine.

Since a revolution ratio of these index wheels have to be so set that a displacement of indentation 7 of index wheel 4-1 of automatic machine can be matched with a displacement of indentation 8 of star index wheel 3, the revolutions of these index wheels in this embodiment are synchronized at a ratio of 1 : 1. Therefore, the peripheral speed of star index wheel 3 is set at about twice of that of index wheel 4-1 of automatic machine.

Moreover, the transporting speed of carrying conveyer 2 is set at a speed nearly same as the peripheral speed of index wheel 4-1 of automatic machine. Although the revolution of radial index table 3 is same as the revolution of index table 4-1 of automatic machine synchronized each other establishing a revolution ratio of 1:1, the time required to cause a 30 degree peripheral displacement corresponding to one indentation is same between these index wheels producing an above-shown difference in displacements of cell 1.

This means that the peripheral speed of index table 4-1 of automatic machine is higher than that of star index wheel since the diameter of index table 4-1 is larger than that of star index wheel 3, and this means that the displacement distance of cell 1 is longer when index wheel 4-1 of automatic machine is used.

Moreover, since the transporting speed of carrying conveyer is same as the peripheral speed of index wheel 4-1 of automatic machine, this means that this is higher than the peripheral speed of star index wheel 3.

Cells 1 being transported by carrying conveyer 2 without gaps in-between are struck one-after-another on protrusion 12 protruded from indentation 8 of star index wheel 3 provided within straight guide 5, so that the displacement of cell 1 is restricted to be a displacement of indentation 8 of star index wheel 3. As the rotating angle of star index wheel 3 is further increased, and as soon as protrusion 12 is displaced to the outside of straight guide 5 provided at the end of carrying conveyer 2, the displacing movement of cell 1 becomes unrestricted, and cell 1 starts moving again at a transporting speed of carrying conveyer 2.

As above-described, the speed of cell 1 is varied regularly in a way starting from the transporting speed of carrying conveyer 2, peripheral speed of star index wheel 3, and again into the transporting speed of carrying conveyer 2, which is the peripheral speed of index wheel 4-1 of automatic machine.

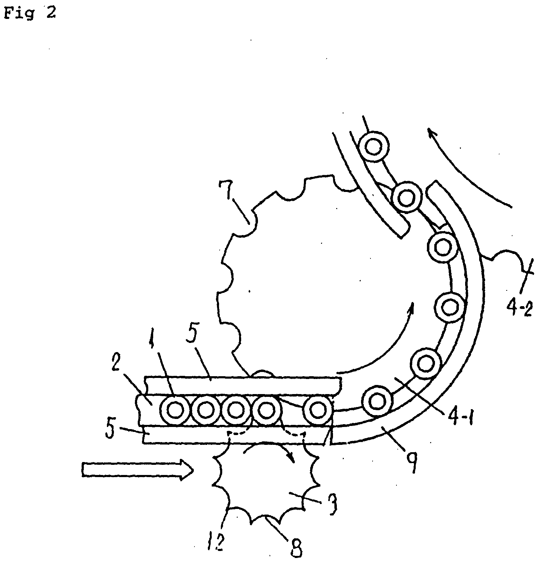

Within a series of these movements of cell 1, during a period in which the peripheral speed of star index wheel 3 is changed into the peripheral speed of index wheel 4-1 of automatic machine, the gap distances of cells 1 disposed without mutual gaps in-between are spread to a predetermined distance by utilizing a difference in the displacement took place from the time when the first cell 1 becomes a speed of index wheel 4 of automatic machine after it is released from the restriction caused by protrusion 13 of star index wheel 3 until the time when the succeeding cell 1 is released from the succeeding protrusion 12 of star index wheel 3. Fig. 2 is to show a condition of this.

Moreover, since the displacement of indentation 8 of automatic machine 3 and the displacement of indentation 7 index wheel 4-1 of automatic machine, and since one displacement of indentation 7 of index wheel 4-1 of automatic machine shall be made for one displacement of indentation 8 of star index wheel as said before, cell 1 released from the restriction of protrusion 12 of indentation 8 of star index wheel 3 can be inserted smoothly into the corresponding indentation 7 of index wheel 4-1 of automatic machine.

Furthermore, in this embodiment of the invention, the disposition distance between the indentations on these peripherals of star index wheel 3 and index wheel 4-1 of automatic machine corresponds to a distance of about twice of the diameter of cell 1 which is very close, assuring further the insertion of cell 1 into indentation 7 of automatic machine.

If dispositional relationships between these components could be so established that the indentation 7 of corresponding index wheel 4-1 of automatic machine starts the acceptance of cell 1 therein at a condition where cell 1 is released from protrusion 12 of star index wheel 3 and the speed of cell 1 comes up to the speed of carrying conveyer 2, the transport speed of carrying conveyer 2 need not be maintained at a peripheral speed of index wheel 4-1 of automatic machine.

On the contrary, the setting of disposition distances of the star index wheel 3 and index wheel 4-1 of automatic machine can be arbitrary if carrying conveyer 2 is held at a condition or when cells 1 are held by using permanent magnets, for example, enabling the input of cells 1 into index wheel 4-1 of automatic machine while maintaining the widened gap distance obtained right after cell 1 is released from protrusion 12 protruded from indentations 8 of star index wheel.

Moreover, in this embodiment of the invention, although the numbers of indentations disposed on star index wheel 3 and index wheel 4-1 of automatic machine are set at a ratio of 1 : 1, if a condition of the ratio of the numbers of indentations and the ratio of rotations, or the ratio of movement of indentation 4-1 of automatic machine to the movement of indentation 8 of star index wheel is set at a ratio of 1:1, the numbers of respectively disposed indentations can be determined arbitrarily.

For example, it is needless to mention that a direct input of articles from a star index wheel with a smaller number of indentations into an index wheel with a larger number of indentations of automatic machine is possible.

Fig. 3 shows a planar layout of an automatic machine of such comprised of star index wheel 3, index wheel 4-1 of automatic machine combined with a second index wheel 4-2, and an outlet index wheel 4-3.

## Claims

1. An apparatus for separating round or cylindrical magnetic articles (1), said apparatus comprising:
a carrying conveyor (2) for transporting said articles (1) in a continuous manner, said carrying conveyor (2) having a pair of straight guides (5) provided in parallel to each other and separated by a distance substantially equal to a diameter of said articles (1), wherein said pair of straight guides (5) have a center line located equidistant between each straight guide (5), and wherein said carrying conveyor (2) transports said articles (1) without a gap between said pair of guides (5) and said articles (1),
a star index wheel (3) disposed at a side of said carrying conveyor (2) for separating said articles (1), wherein said star index wheel (3) has a plurality of circular-arc notches (8) disposed around its outer edge for engaging and separating said articles (1) between consecutive protrusions (12), wherein said star index wheel (3) revolves at a specific rotational speed and wherein each circular-arc notch (8) of said star index wheel (3) has a center of curvature that moves along said center line in a tangential manner during a revolution of said star index wheel (3),
**characterized by**
a supply index wheel (4-1) for receiving said articles from said star index wheel (3), wherein said supply index wheel (4-1) has a plurality of circular-arc notches (7) disposed around an outer edge of the supply index wheel (4-1), wherein said supply index wheel (4-1) revolves at a specific rotational speed, and wherein each circular-arc notch (7) of said supply index wheel (4-1) has a center of curvature that moves along an arc, said center line of said straight guides (5) being at a tangent to said arc during a revolution of said supply index wheel (4-1),
a curved guide rail (9) provided around the periphery of said supply index wheel (4-1), and
said carrying conveyor (2) comprising a permanent magnet for holding said articles (1).

2. An apparatus according to claim 1, wherein a radius of each circular-arc notch (8) of said star index wheel (3) and a radius of each circular-arc notch (7) of said supply star index wheel (4-1) are nearly equivalent to the radius of said articles.

3. An apparatus according to claim 1 or 2,
wherein a speed of said carrying conveyor (2) is set at a rate equivalent to a peripheral speed of said supply index wheel (4-1), and
wherein a peripheral speed of said star index wheel (3) is set at a rate slightly slower than said speed of said carrying conveyor (2) and said peripheral speed of said supply index wheel (4-1).

4. An apparatus according to any of claims 1 to 3,
wherein a diameter of said supply index wheel (4-1) is about twice a diameter of said star index wheel (3), and
wherein a peripheral speed of said star index wheel (3) is set at nearly twice a peripheral speed of said supply index wheel (4-1).

5. An apparatus according to any of claims 1 to 4, wherein the rotational speed of said star index wheel (3) and the rotational speed of said supply index wheel (4-1) is set to about a ratio of 1:1.

6. An apparatus according to any of claims 1 to 5, wherein said supply index wheel (4-1) revolves intermittently or continuously at a specific rotational speed.

## Patentansprüche

1. Vorrichtung zum Trennen runder oder zylindrischer magnetischer Gegenstände (1), wobei die Vorrichtung umfasst:
eine Trägerfördereinrichtung (2), die die Gegenstände (1) kontinuierlich transportiert, wobei die Trägerfördereinrichtung (2) ein Paar gerader Führungen (5) aufweist, die parallel zueinander angeordnet und um einen Abstand getrennt sind, der im Wesentlichen einem Durchmesser der Gegenstände (1) entspricht, wobei das Paar gerader Führungen (5) eine Mittellinie hat, die gleichmäßig beabstandet zwischen den geraden Führungen (5) angeordnet ist, und wobei die Trägerfördereinrichtung (2) die Gegenstände (1) ohne Zwischenraum zwischen dem Paar Führungen (5) und den Gegenständen (1) transportiert,
ein Stern-Schaltrad (3), das an einer Seite der Trägerfördereinrichtung (2) angeordnet ist, um die Gegenstände (1) zu trennen, wobei das Stern-Schaltrad (3) eine Vielzahl kreisbogenförmiger Kerben (3) aufweist, die um seinen Außenrand herum angeordnet sind und mit den Gegenständen (1) zwischen aufeinanderfolgenden Vorsprüngen (12) in Eingriff kommen und sie trennen, wobei das Stern-Schaltrad (3) sich mit einer bestimmten Umdrehungsgeschwindigkeit dreht, und wobei jede kreisbogenförmige Kerbe (8) des Stern-Schaltrades (3) einen Krümmungsmittelpunkt hat, der sich bei einer Umdrehung des Stern-Schaltrades (3) tangential entlang der Mittellinie bewegt,
**gekennzeichnet durch**:
ein Zuführ-Schaltrad (4-1), das die Gegenstände von dem Stern-Schaltrad (3) empfängt, wobei das Zuführ-Schaltrad (4-1) eine Vielzahl kreisbogenförmiger Kerben (7) aufweist, die um einen Außenrand des Zuführ-Schaltrades (4-1) herum angeordnet sind, und wobei sich das Zuführ-Schaltrad (4-1) mit einer bestimmten Umdrehungsgeschwindigkeit dreht, und wobei jede kreisbogenförmige Kerbe (7) des Zuführ-Schaltrades (4-1) einen Krümmungsmittelpunkt hat, der sich während einer Umdrehung des Zuführ-Schaltrades (4-1) entlang eines Kreisbogens bewegt, wobei die Mittellinie der geraden Führungen (5) eine Tangente des Kreisbogens ist,
eine gekrümmte Führungsschiene (9), die um den Umfang des Zuführ-Schaltrades (4-1) herum angeordnet ist, und
wobei die Trägerfördereinrichtung (2) einen Permanentmagneten umfasst, der die Gegenstände (1) hält.

2. Vorrichtung nach Anspruch 1, wobei ein Radius jeder kreisbogenförmigen Kerbe (8) des Stern-Schaltrades (3) und ein Radius jeder kreisbogenförmigen Kerbe (7) des Stern-Schaltrades (4-1) nahezu dem Radius der Gegenstände entsprechen.

3. Vorrichtung nach Anspruch 1 oder 2, wobei eine Geschwindigkeit der Trägerfördereinrichtung (2) auf einen Wert eingestellt ist, der einer Umfangsgeschwindigkeit des Zuführ-Schaltrades (4-1) entspricht, und
wobei eine Umfangsgeschwindigkeit des Stem-Schaltrades (3) auf einen Wert eingestellt ist, der etwas langsamer ist als die Geschwindigkeit der Trägerfördereinrichtung (2) und die Umfangsgeschwindigkeit des Zuführ-Schaltrades (4-1).

4. Vorrichtung nach einem der Ansprüche 1 bis 3,
wobei ein Durchmesser des Zuführ-Schaltrades (4-1) ungefähr dem Zweifachen eines Durchmessers des Stem-Schaltrades (3) entspricht, und
wobei eine Umfangsgeschwindigkeit des Stem-Schaltrades (3) auf nahezu das Zweifache einer Umfangsgeschwindigkeit des Zuführ-Schaltrades (4-1) eingestellt ist.

5. Vorrichtung nach einem der Ansprüche 1 bis 4, wobei die Umdrehungsgeschwindigkeit des Stern-Schaltrades (3) und die Umdrehungsgeschwindigkeit des Zuführ-Schaltrades (4-1) auf ein Verhältnis von ungefähr 1:1 eingestellt sind.

6. Vorrichtung nach einem der Ansprüche 1 bis 5, wobei sich das Zuführ-Schaltrad (4-1) intermittierend oder kontinuierlich mit einer bestimmten Umdrehungsgeschwindigkeit dreht.

## Revendications

1. Dispositif destiné à séparer des articles magnétiques ronds ou cylindriques (1), ledit dispositif comprenant :
un convoyeur de transport (2) destiné à transporter lesdits articles (1) de manière continue, ledit convoyeur de transport (2) comportant une paire de guides droits (5) disposés parallèlement l'un à l'autre et séparés d'une distance sensiblement égale à un diamètre desdits articles (1), dans lequel ladite paire de guides droits (5) présente un axe central situé de façon équidistante entre chaque guide droit (5), et dans lequel ledit convoyeur de tranport (2) transporte lesdits articles (1) sans intervalle entre ladite paire de guides (5) et lesdits articles (1).
une roue à divisions en étoile (3) disposée d'un côté dudit convoyeur de transport (2) afin de séparer lesdits articles (1), dans lequel ladite roue à divisions en étoile (3) comporte une pluralité d'encoches en arc circulaire (8) disposées autour de son bord extérieur en vue de saisir et de séparer lesdits articles (1) entre des protubérances consécutives (12), dans lequel ladite roue à divisions en étoile (3) tourne à une vitesse de rotation spécifique et dans lequel chaque encoche en arc circulaire (8) de ladite roue à divisions en étoile (3) présente un centre de courbure qui se déplace le long dudit axe central de manière tangentielle durant un tour de ladite roue à divisions en étoile (3).
**caractérisé par**
une roue à divisions d'alimentation (4-1) destinée à recevoir lesdits articles de ladite roue à divisions en étoile (3), dans lequel ladite roue à divisions d'alimentation (4-1) comporte une pluralité d'encoches en arc circulaire (7) disposées autour d'un bord extérieur de la roue à divisions d'alimentation (4-1), dans lequel ladite roue à divisions d'alimentation (4-1) tourne à une vitesse de rotation spécifique, et dans lequel chaque encoche en arc circulaire (7) de ladite roue à divisions d'alimentation (4-1) présente un centre de courbure qui se déplace le long d'un arc, ledit axe central desdits guides droits (5) étant au niveau d'une tangente audit arc durant un tour de ladite roue à divisions d'alimentation (4-1),
un rail de guidage courbe (9) prévu autour de la périphérie de ladite roue à divisions d'alimentation (4-1), et
ledit convoyeur de transport (2) comprenant un aimant permanent destiné à retenir lesdits articles (1).

2. Dispositif selon la revendication 1, dans lequel un rayon de chaque encoche en arc circulaire (8) de ladite roue à divisions en étoile (3) et un rayon de chaque encoche en arc circulaire (7) de ladite roue à divisions d'alimentation (4-1) sont presque équivalents au rayon desdits articles.

3. Dispositif selon la revendication 1 ou 2,
dans lequel une vitesse dudit convoyeur de transport (2) est réglée à une cadence équivalente à une vitesse périphérique de ladite roue à divisions d'alimentation (4-1), et
dans lequel une vitesse périphérique de ladite roue à divisions en étoile (3) est réglée à une cadence légèrement plus lente que ladite vitesse dudit convoyeur de transport (2) et que ladite vitesse périphérique de ladite roue à divisions d'alimentation (4-1).

4. Dispositif selon l'une quelconque des revendications 1 à 3,
dans lequel un diamètre de ladite roue à divisions d'alimentation (4-1) est environ le double d'un diamètre de ladite roue à divisions en étoile (3), et
dans lequel une vitesse périphérique de ladite roue à divisions en étoile (3) est réglée à presque deux fois la vitesse périphérique de ladite roue à divisions d'alimentation (4-1).

5. Dispositif selon l'une quelconque des revendications 1 à 4, dans lequel la vitesse de rotation de ladite roue à divisions en étoile (3) et la vitesse de rotation de ladite roue à divisions d'alimentation (4-1) est réglée à environ un rapport de 1 : 1.

6. Dispositif selon l'une quelconque des revendications 1 à 5, dans lequel ladite roue à divisions d'alimentation (4-1) tourne de façon intermittente ou continue à une vitesse de rotation spécifique.
